# EUROPEAN PATENT APPLICATION

(11) **EP 1 426 103 A2**
(43) Date of publication of application: **09.06.2004**
(21) Application number: 02798837.7
(22) Date of filing: 13.09.2002
(51) Int. Cl.: B01J 19/12, C08G 85/00, G02B 5/30, G03C 1/73, B41M 5/26, G02B 6/12

(54) **MOLECULAR ORIENTATION CONTROLLING METHOD AND MOLECULAR ORIENTATION CONTROLLING DEVICE**

(30) Priority: 14.09.2001 JP 2001279648; 26.03.2002 JP 2002084669; 27.06.2002 JP 2002187057
(71) Applicant: National Institute of Advanced Industrial Science and Technology, Tokyo 100-8901 (JP)
(72) Inventor: MONOBE, H., Kansai Center of N.I.A.I.S. & T., Ikeda-shi, Osaka 563-8577 (JP); SHIMIZU, Yo, Kansai Center of N.I.A.I.S. & T., Ikeda-shi, Osaka 563-8577 (JP); AWAZU, Kunio, 9-5 Tsudayamate2chome Hirakata-shi Osaka (JP)
(74) Representative: Müller-Boré & Partner Patentanwälte
(86) International application number: PCT/JP2002/009416
(87) International publication number: WO 2003/024586

(57) **Abstract**

The present invention relates to a minute molecular orientation controlling comprising the steps of specifically exciting the vibration energy level of an intramolecular chemical bond of a molecular material by using infrared light to locally and anisotropically heat the molecule and hence cause a thermal non-equilibrium state, and then selectively re-orienting in the specific direction of in-plane and out-of-plane directions with respect to a plane perpendicular to the incident axis dependent on the incident direction and polarization direction; and a device for controlling the process.

## Description

### TECHNICAL FIELD

The present invention relates to a method for controlling molecular orientation by irradiation with infrared light, functional materials having controlled molecular orientation and a molecular orientation controlling device.

### BACKGROUND OF THE INVENTION

Triphenylene, phthalocyanine and porphyrin-based discotic liquid crystals have been expected as electrically conducting materials due to the high charge transfer rate along the column axis. In order to obtain high-performance functionality, control of molecular orientation of liquid crystal has been attempted by utilizing, for example, interactions with substrates based on liquid crystallinity.

For example, U.S. Patent No. 4,974,941 (Japanese Unexamined Patent Publication No. 1990-277025) discloses a process of aligning liquid crystal molecules. This alignment process is based on molecular electronic transitions, and is not based on vibrational excitation. This alignment process is induced by exposure of anisotropically absorbing molecules, the anisotropic molecules being thermotropic liquid crystal compounds and dichroic dyes which have a dichroism absorption wavelength band within the range of about 150 nm and about 2,000 nm. There is no description of absorption based on vibrational excitation at wavelengths not less than 2.5 µm (2,500 nm; 4,000 cm⁻¹).

An object of the present invention is to provide a method of easily controlling a direction of molecular orientation by irradiation with infrared light which almost all molecules absorb (wavelength of 2.5 µm to 25 µm).

Moreover, the present invention aims to provide functional materials with oriented molecules.

Further, the present invention aims to provide a molecular orientation controlling device.

### BRIEF DESCRIPTION OF DRAWINGS

Fig. 1 is a schematic view illustrating an example of a reversible molecular orientation controlling device by irradiation with polarized infrared light.
Fig. 2 is a copy of polarization micrographs showing liquid crystal molecular orientation is perpendicular to the incident direction and the polarization direction in Example 1.
Fig. 3 is a copy of polarization micrographs showing liquid crystal molecular orientation is perpendicular to the incident direction and the polarization direction in Example 2.
Fig. 4 is a copy of polarization micrographs showing liquid crystal molecular orientation is perpendicular to the incident direction and the polarization direction in Example 3.
Fig. 5 is a copy of polarization micrographs showing orientation of liquid crystal molecular is switched by irradiation with infrared light of different wavelengths in Example 5.
Fig. 6 is a copy of polarization micrograph in Example 6.
Fig. 7 shows the plane-of-polarization dependence of the irradiated infrared laser beam output in Example 6 (vertical axis: optical intensity, circumferential direction: angle).
Fig. 8 shows the angular dependence of the polarization infrared absorption intensity at 1,615 cm⁻¹ assigned to an aromatic C-C bond of a core part of molecules in a region in which liquid crystal molecules in Example 6 are subjected to orientation control by the infrared light shown in Fig. 7 (vertical axis: absorption intensity, circumferential direction: angle).
Fig. 9 shows an example of an optical system used for varying the direction of a plane of polarization of irradiated infrared laser light, in which the direction of a plane of polarization of irradiated infrared light is varied by adjusting the tilt angle and height of a mirror.
Figs. 10 through 17 each show an example of the method of the invention.
Fig. 18 is a copy of polarization micrographs in Example 7.

### DISCLOSURE OF THE INVENTION

The inventors found out that the orientation of molecular materials is controllable not only in a liquid phase (including liquid crystals and mesophases) but also in a solid phase by irradiating the molecular material with infrared light to excite vibrations and heat specifically and further found out that reorientation is possible by controlling the orientation of a molecular material by adjusting the wavelength, irradiation direction, or polarization direction of the infrared light irradiation.

Moreover, with respect to a region which was once orientated in one direction by infrared light irradiation or another method, the molecular material can be re-oriented reversibly and repeatedly by irradiation with infrared light while selecting the irradiation wavelength, a plane of polarization and incident direction. Thus, the inventors found that the structure of molecular orientation is re-writable and structure can be drawn minutely.

Moreover, the inventors found that the orientation structure obtained by irradiation of infrared light can be fixed by photopolymerization or the like and accomplished the present invention.

The present invention relates to a method for controlling molecular orientation, a functional material and a molecular orientation controlling device, which will be described in the following.
Item 1. A method for controlling orientation of a molecular material which is characterized by orienting molecules of the material by irradiating the molecular material with infrared light.
Item 2. The method according to Item 1, wherein the infrared light is polarized infrared light.
Item 3. The method according to Item 1, wherein the molecular material is at least one selected from the group consisting of liquid crystal material, amorphous material, plastic crystal material, polymer liquid crystal material and orientational polymer material.
Item 4. The method according to Item 3, wherein the liquid crystal material forms a liquid crystal phase.
Item 5. The method according to Item 3, wherein the liquid crystal material forms a solid phase.
Item 6. The method according to Item 1, which comprises irradiation with infrared light of a wavelength which vibration moment in optional intramolecular bonds of the molecular material absorbs, to orientate the molecules in a certain direction with respect to the polarization direction or incident direction of the irradiation light wherein the direction of the vibration moment is perpendicular to the polarization direction or parallel to the incident direction.
Item 7. The method according to Item 1, wherein the molecular material is sandwiched between two substrates, and said method comprises switching orientation of the molecular material reversibly between directions parallel and perpendicular to the substrates by irradiation with polarized infrared light from perpendicular or parallel direction with respect to the substrate at least twice while varying at least one selected from the group consisting of incident direction, polarization direction and wavelength.
Item 8. The method according to Item 1, which is characterized by controlling orientation for each segment in the molecules of the material towards a desired direction by irradiating simultaneously or sequentially with infrared light of different wavelengths.
Item 9. The method according to Item 1, wherein the infrared light has a wavelength within the range of 2.5 to 25 µm.
Item 10. The method according to Item 1, wherein the infrared light is laser light.
Item 11. The method according to Item 1, wherein the molecular material is sandwiched between two substrates, and said method comprises switching the orientation of the molecules between the in-plane and out-of-plane directions with respect to the substrate surfaces by irradiation with infrared light at least twice.
Item 12. The method according to Item 1, wherein the molecular material develops a liquid crystal phase selected from the group consisting of a nematic phase, a smectic phase, a cholesteric phase, a columnar phase and a cubic phase, or the related mesophase within a specific temperature range, and is liquid crystal molecular which molecular orientation is varied by being irradiated with the infrared light.
Item 13. The method according to Item 12, wherein the material is in a columnar phase.
Item 14. A functional material in which molecular orientation is controlled by the method according to Item 1.
Item 15. The material according to Item 14, wherein the functional material is an optical recording material, a conductive material, an optical element or an optical waveguide.
Item 16. The material according to Item 14, wherein the functional material is an optical recording material in which the molecules of the material are fixed by photopolymerization, photo-crosslinking or photocure.
Item 17. An orientation controlling device for a molecular material which is provided with an infrared light irradiation unit and a placement unit for the molecular material.
Item 18. The device according to Item 17 which is provided with a polarization element that transforms infrared light to polarized infrared light.
Item 19. The device according to Item 17 which is provided with a controlling unit of incident direction of an infrared light.
Item 20. The device according to Item 17 which is provided with a controlling unit of a polarization direction.
Item 21. The device according to Item 17 which is provided with a controlling unit of an infrared light wavelength.
Item 22. The device according to Item 17 wherein the infrared light has a wave number between 400 cm⁻¹ and 4,000 cm⁻¹ (2.5 µm to 25 µm) and has polarization dichroism.
Item 23. The device according to Item 17 wherein the placement unit is provided with a temperature controlling unit for controlling the temperature to the specific range in which the molecular material can develop a liquid crystal phase or a mesophase.

### DETAILED DESCRIPTION OF THE INVENTION

The orientation control of the present invention includes the following three cases:
(1) Orienting a molecular material which already oriented in one direction before irradiation of infrared light is oriented in another direction (orientation of molecular material is varied) (for example, Examples 1 to 6).
(2) Making a molecular material which already oriented in one direction before irradiation of infrared light is rendered to be non-orientation or the degree of orientation is reduced(for example, Example 7).
(3) Orienting a component molecule of non-orientation before irradiation of infrared light is oriented in a certain direction.

Molecular materials used in the invention include liquid crystal materials, amorphous materials, plastic crystal materials and polymer materials.

The molecules of the material to be oriented are components of a molecular material, and more specifically, liquid crystal molecules, amorphous molecules, plastic crystal molecules or polymer material molecules are mentioned.

A segment of molecules of a material denotes an atomic group which can be oriented in one direction. More specifically, functional groups, such as an ester, alkyl, alkoxy, amide, ether, ketone, aldehyde, hydroxyl, aryl, arylene, aralkyl, alkenyl, alkynyl, amino, cyano, carboxyl, carbonyl, nitro, phenyl, biphenyl, etc.; a condensed hydrocarbon ring; a condensed heterocycle ring; and successive portions of same monomers in a copolymer (each block of a block copolymer, each graft of a graft copolymer, chain portion of each monomer of a random copolymer having a certain average chain length) can be mentioned.

The plastic crystal material of the present invention is a material having a state wherein the molecular orientation in the crystal is extremely disordered, and includes fullerenes, etc. (multilayer nanotubes, single layer nanotubes, C60, C70 and higher fullerenes are included). A compound showing high fluidity at a room temperature can be subjected to molecular orientation control after the temperature is lowered to reduce the fluidity of the compound.

The amorphous material of the invention is a solid material having atomic alignment without a crystalline and may also be called non crystalline or amorphous and includes phthalocyanines, etc. In general, such amorphous materials require, depending on the materials, longer periods of irradiation or stronger light intensity irradiation as compared with liquid crystal materials.

The polymer material includes polymer liquid crystal materials and orientational polymer materials.

The polymer liquid crystal material included in the polymer material used in the invention is not limited insofar as molecular orientation of the polymer varies by irradiation with infrared light having a wavelength equivalent to an infrared light absorbing band of the material, and includes polymers having rod-like mesogenic moieties such as biphenyl group as a side-chain moiety or a main-chain moiety, such as side-chain polymer liquid crystals, main-chain polymer liquid crystals, etc.

Orientational polymer materials include all polymers, insofar as the material has orientation, and includes thermoplastic resins such as polyesters such as polyethylene terephthalate, etc., polystyrene, polyolefins such as polyethylene, polypropylene, etc., polyvinyl chloride, polycarbonates, polyamides, polyacetals, polysulfones, polyether esters, polyether sulfones, polyurethanes, etc.; thermosetting resins such as polyphenols, silicones, etc.; copolymers thereof (block copolymers, random copolymers, graft copolymers), proteins, DNA and RNA.

Liquid crystal materials in the invention are not particularly limited and include liquid crystal materials formed when general rod-like liquid crystal molecules or discotic liquid crystal molecules associate selectively, and preferably contain, for example, triphenylene-based, phthalocyanine-based, and porphyrin-based discotic liquid crystal molecules.

In particular, a liquid crystal material comprising triphenylene-based discotic liquid crystal molecules is preferred, and it contains a triphenylene compound represented by the following general formula as one of the preferred examples.

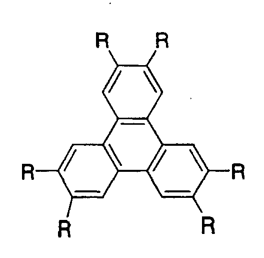

R in the above-mentioned general formula is the same or different, and represents an alkyl, alkoxy, alkyl benzoyloxy, alkoxy benzoyloxy, alkylthio group, etc. The alkyl moiety of these groups include linear, cyclic or branched aliphatic hydrocarbon groups having 1 to 18 carbons, preferably 4 to 12 carbons, and more preferably 4 to 8 carbons. In particular, R includes alkoxy groups of 1 to 18 carbons, preferably 4 to 12 carbons and more preferably 4 to 8 carbons.

It is preferable that the liquid crystal material develops a liquid crystal phase selected from the group consisting of a nematic phase, a smectic phase, a cholesteric phase, a columnar phase and a cubic phase or a related mesophase within a specific temperature range, and a columnar phase is especially preferable. In the specification, a related mesophase means a columnar-plastic phase, a helical phase, a flexible crystalline phase, etc.

The invention carries out irradiation of infrared light having a wavelength equivalent to the vibrational energy of any intramolecular chemical bond of the molecular material. Polarized infrared light can be used for a molecular material exhibiting fluidity, and in particular a liquid crystal material of a liquid crystal phase and a polymer liquid crystal material, while polarized or non-polarized infrared light can be used for a liquid crystal material of a solid phase, a polymer liquid crystal material and an orientational polymer material, and hereinafter such infrared light is simply denoted as "infrared light". When polarized infrared light is used, the target molecules can be oriented in a direction depending on the polarization direction of the irradiating light. In this specification, the "direction of polarization" means vibration direction of the electric vector of the infrared light, and a plane of polarization means a plane including the traveling direction and the electric vector of the infrared light. Polarized infrared light includes linearly polarized infrared light, circularly polarized infrared light and elliptically polarized infrared light.

The above description of "orienting molecules in a direction depending on the polarization direction" means that molecules are oriented in the direction in which the vibrational transition moment of an intralmolecular chemical bond becomes perpendicular to the polarization direction. More specifically, molecules are oriented so that bonds having the corresponding vibration energy are oriented in the direction in which the polarized infrared light is not absorbed when the polarized infrared light of a certain wavelength is received. In other words, molecules are oriented so that the polarization direction may become perpendicular to the vibration direction of the chemical bond.

In the invention, infrared light having a wavelength equivalent to the vibrational excitation energy of any chemical bond in each molecule can be irradiated to the above-mentioned materials.

The infrared light preferably has a wavelength within the range of 2.5 to 25 µm (a wave number of 400 to 4,000 cm⁻¹), and more preferably a wavelength within the range of 2.5 to 12.5 µm (a wave number of 800 to 4,000cm⁻ ¹). The wavelength of the infrared light can be selected from the above-described range which excites the vibration energy level of at least one bond of the molecular skeleton and a substituent of each molecule.

For example, hexakisalkyloxytriphenylene compound used in Example 1 is taken as an example of a triphenylene-based liquid crystal compound. In this case, liquid crystal molecules are re-oriented by irradiating with infrared light equivalent to: wavelength 6.19 µm (wave number 1,615 cm⁻¹) and wavelength 6.63 µm (wave number 1,509 cm⁻¹) resulting from vibration of an aromatic C-C bond of core of the triphenylene molecule; wavelength 6.99 µm (wave number 1,431 cm⁻¹), wavelength 7.93 µm (wave number 1,261 cm⁻¹), wavelength 8.58 µm (wave number 1,166 cm⁻¹), and wavelength 9.64 µm (wave number 1,039 cm⁻¹) resulting from an alkoxy group C-O-C bond; wavelength 3.41 µm (wave number 2,932 cm⁻¹) and wavelength 3.50 µm (wave number 2,861 cm⁻¹) resulting from an alkyl group; and wavelength 11.92 µm (wave number 839 cm⁻¹) resulting from out-of-plane vibration of an aromatic C-H bond, etc. In generally-used rod like crystals, porphyrin-based and phthalocyanine-based compounds, liquid crystal molecules are also re-oriented by irradiating with infrared light equivalent to the absorption band of each compound.

Excitation resulting from vibration transition is a phenomenon which is excited by absorbing light of a wavelength inherent to each chemical bond in the molecule. The direction of vibrational transition moment in each bond varies corresponding to the absorption wavelength even in a same chemical bond moiety depending on a mode such as the stretching vibration mode, out-of-plane vibration mode, etc. Thus, in the orientation controlling method of a molecular material through vibrational excitation, liquid crystal molecules can be re-oriented by vibrating and exciting molecules by irradiation with a selected infrared light which has the wavelength corresponding to each chemical bond in the liquid crystal molecules.

A molecule which absorbs anisotropic light needs not necessarily selected in the target molecule. A chemical bond moiety in the target molecule can be specifically vibrated and excited by selecting the wavelength of irradiated infrared light.

In the invention, molecular orientation is turned to a specific direction through the use of polarized infrared light. Thus, the invention is preferably used as a display, and which enables optical waveguide construction.

In the present invention, use of infrared light with polarization dichroism causes liquid crystal molecules to orient in the direction parallel to the incident direction of infrared light, which enables formation of a waveguide with optical anisotropy and of an anisotropical conductive path in the liquid crystal film.

It is preferred in this invention that directions of polarization are completely uniform, although the directions of polarization may be distributed to some extent. It can be considered that molecules rotate in plane by thermal motion in a liquid crystal state. In the case of symmetrical liquid crystal molecules, molecular rotation cannot be distinguished, while in the case of asymmetrical molecules, molecules may rotate when a portion that absorbs infrared light is located in a specific position.

A local thermal non-equilibrium state, in other words a state where molecules have high mobility, is developed by vibrating and exciting molecules themselves using infrared light, heating the molecules specifically. Utilizing this property, a liquid crystal molecule aggregation system and a liquid crystal polymer system can be controlled for re-orientation by varying the wavelength, irradiation direction and polarization direction of the irradiated infrared light.

In other words, molecular orientation can be controlled by utilizing the fact that when liquid crystal molecules in a liquid crystal phase are irradiated with polarized infrared light of a wavelength which a vibration moment in any bonds in the liquid crystal molecules absorb, the liquid crystal molecules are oriented so that direction of the vibration moment turns to a direction ±90° to the polarization direction and incident direction of the irradiating light. In the same manner, molecular orientation can be controlled with respect to component molecules of a molecular material other than liquid crystal molecules in a liquid crystal phase.

Moreover, molecular orientation can be re-oriented to the in-plane direction or out-of-plane direction perpendicular to incident direction and polarization direction of the irradiating light regardless of the orientation direction of the component molecules, such as liquid crystal molecules, by selecting irradiating infrared light of a wavelength corresponding to a vibration mode which has a vibrational transition moment parallel to the molecular skeleton plane, or irradiating infrared light of a wavelength corresponding to a vibration mode which has a vibrational transition moment perpendicular to the molecular skeleton plane. Similarly, a molecular orientation can also be re-oriented by varying the plane of polarization of the infrared light to be irradiated by ±90°. A liquid crystal material is sandwiched between two substrates, and infrared light of different wavelengths irradiates the liquid crystal material one or more times, whereby the orientation of the liquid crystal molecules with respect to the substrate can be switched reversibly between the parallel direction and perpendicular direction. For this process, a substrate which can transmit irradiated infrared light is preferred for sandwiching the liquid crystal material.

For example, molecules are re-oriented in a specific direction alternately depending on the polarization direction after the molecules are heated and a thermal non-equilibrium state is locally developed by specifically exciting the vibrational energy level of a intramolecular chemical bond using a monochromatic infrared light with polarization characteristics, such as a free-electron laser. Utilizing this, control of molecular orientation can be precisely carried out so that direction control for every intramolecular chemical bond can be performed.

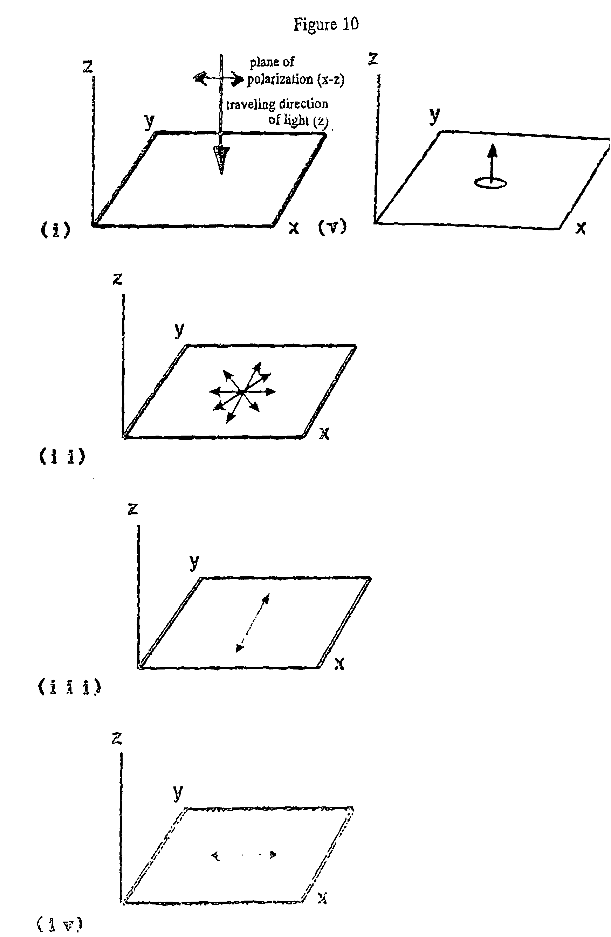

Examples of the method of the invention will be explained in more detail with reference to Figs. 10 to 17.

Fig. 10 (i) shows polarization infrared light to be irradiated. The incident axis is the z axis and the plane of polarization is plotted as the x-z plane.

Fig. 10 (ii) shows the bond direction of the molecular skeleton within a disk of a certain discotic molecule. The bond direction is re-oriented in the direction shown in Fig. 10 (iii) when irradiated with the infrared light shown in Fig. 10 (i) in the case of a stretching vibration that absorbs the infrared light in the direction parallel (within the x-y plane) to the bond direction. In the case of discotic molecules, the bond direction exists in all directions in the plane of the disk molecules.

Fig. 10 (iv) shows the bond direction of the molecular skeleton within a disk of a certain discotic molecule. The bond direction is re-oriented in the direction shown in Fig. 10 (iii) or Fig. 10 (v) (not uniquely determined) when irradiated with the infrared light shown in Fig. 10 (i) in the case of a stretching vibration which absorbs infrared light in the direction parallel (x axis) to the bond direction. The bond direction is uniquely re-oriented in the direction shown in Fig. 10 (v) when non-polarized infrared light is irradiated from directly above.

In contrast, the orientation is maintained as it is since infrared light is not absorbed even when irradiated with the infrared light shown in Fig. 10 (i) in the case where infrared light corresponding to an out-of-plane deformation vibration that absorbs infrared light in a direction perpendicular (z-axis direction) to the bond direction is irradiated and in the case where vibrational transition moment which absorbs infrared light turns in the direction perpendicular to the incident axis of the incident light as shown in Fig. 10 (v).

When the direction of the initial absorbing vibrational transition moment is turned to the direction shown in Fig. 10 (iv), the vibrational transition moment turns to two directions of x-axis direction or z-axis direction in the x-y plane as shown in Fig. 10 (v) or (iii) by irradiation with the infrared light shown in Fig. 10 (i). In this case, the direction of vibrational transition moment which absorbs infrared light uniquely re-orients in the direction perpendicular to the incident axis of incident light as shown in Fig. 10 (v) by irradiation with non-polarized infrared light instead of the polarized infrared light shown in Fig. 10 (i).

### Relationships between direction of molecular orientation of the hexakishexyloxy-triphenylene and irradiating light in the case of polarized infrared light irradiation

(Case 1) When hexakishexyloxy-triphenylene (compound I) is in a hexagonal columnar mesophase of a liquid crystal phase or a solid phase and the vibrational transition moment which is vibrated and excited by irradiation of infrared light is within the disk plane of the discotic molecule.
- The two wavelengths at which the aromatic C-C bond of the triphenylene skeleton moiety vibrates and absorbs are 6.19 µm (1,615 cm⁻¹ ) and 6.63 µm (1,509 cm⁻¹).
- The absorption wavelength of the alkoxy moiety is 7.93 µm (1,261 cm⁻¹) with respect to the aromatic C-O bond.
- The wavelength at which the aromatic C-O-alkyl chain C-C bond of the alkoxy moiety absorbs is 8.58 µm (1,166 cm⁻¹).

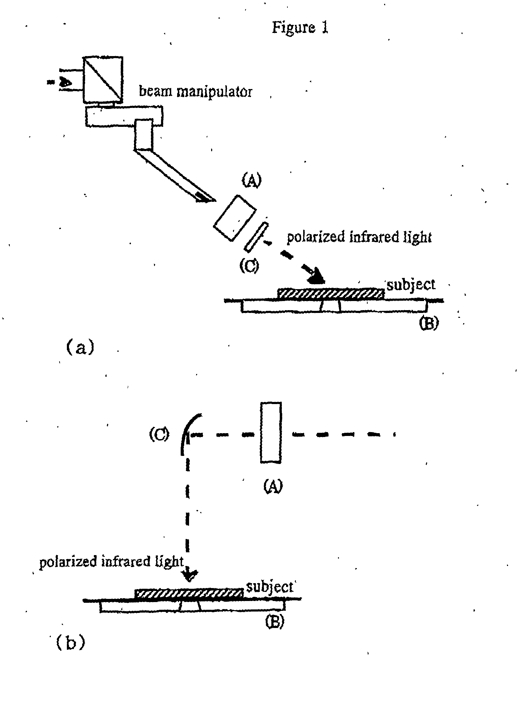

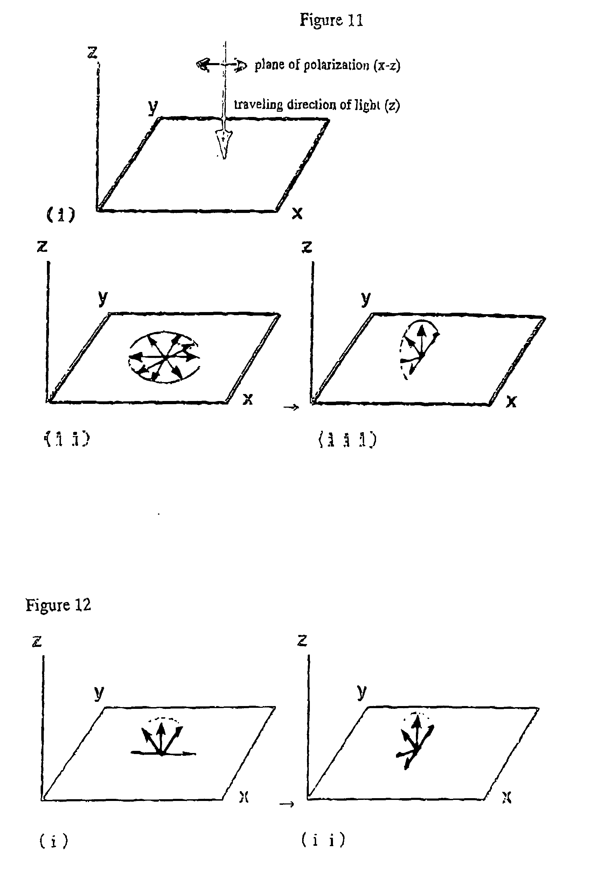

When irradiating infrared laser light from directly above with a device as shown in Fig. 1 (b), discotic molecules in which the disk plane is oriented in a direction parallel to the substrate surface as shown in Fig. 11 (i) are re-oriented to a state where the disk plane turns to a direction perpendicular to the plane of polarization (the plane of vibration of the electric field vector) of the irradiated infrared light and parallel to a direction perpendicular to the incident axis of irradiated light. At this time, the state of the discotic molecules changes from Fig. 11 (ii) to Fig. 11 (iii).

When irradiating with infrared laser light from directly above with a device as shown in Fig. 1 (b), discotic molecules in which the disk plane is oriented perpendicularly to the substrate surface and parallel to the plane of polarization of the irradiated infrared light as shown in Fig. 12 (i) are re-oriented to a state where the disk plane turns to the direction perpendicular to the plane of polarization (the plane of vibration of an electric field vector) of the irradiated infrared light and parallel to a direction perpendicular to the incident axis of irradiated light. At this time, the state of the discotic molecules changes from Fig. 12 (i) to Fig. 12 (ii).

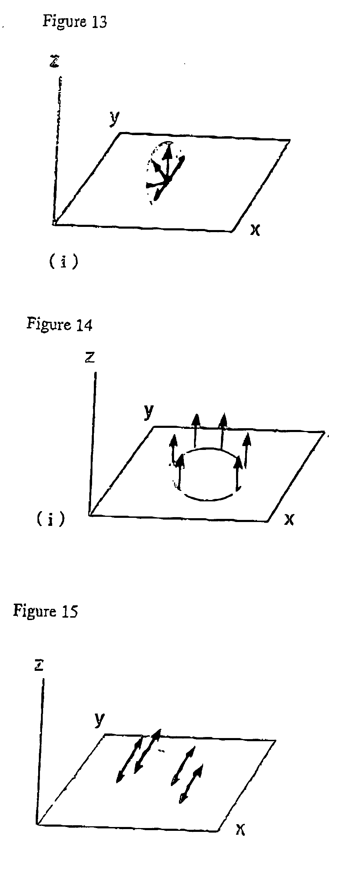

When irradiating with infrared laser light from directly above with a device as shown in Fig. 1 (b), orientation of discotic molecules in which the disk plane is oriented in a direction perpendicular to the substrate surface and perpendicular to the plane of polarization of irradiated infrared light as shown in Fig. 13 (i) does not change. At this time, the state of the discotic molecules do not change from the state shown in Fig. 13 (i) before and after irradiation of infrared light.

(Case 2) When hexakishexyloxytriphenylene (compound I) is in a hexagonal columnar mesophase of a liquid crystal phase or a solid phase, and the vibrational transition moment which is vibrated and excited by irradiation with infrared light is in the out-of-plane direction with respect to the disk plane of the discotic molecules.
- The wavelength which the aromatic C-H bonds of the triphenylene skeleton moiety vibrate and absorb at is 11.92 µm (839 cm⁻¹).

Discotic molecules are held in an original state where the disk plane is oriented parallel to the substrate surface as shown in Fig. 14 (i) when irradiated with infrared laser light from directly above with a device as shown in Fig. 1 (b).

Discotic molecules are held in an original state where the disk plane is oriented perpendicularly to the substrate surface and perpendicular to the plane of polarization of the irradiated infrared light as shown in Fig. 15 (i) when irradiating with infrared laser light from directly above with a device as shown in Fig. 1 (b).

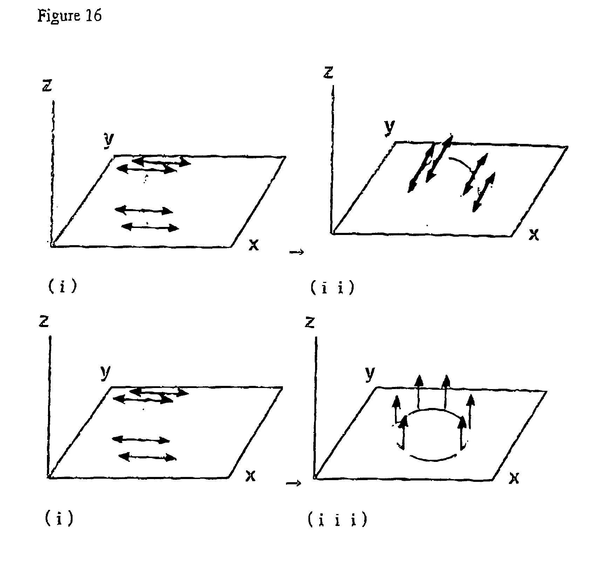

When irradiating with infrared laser light from directly above with a device as shown in Fig. 1 (b), the disk plane of the discotic molecules in which the disk plane is oriented perpendicularly to the substrate surface and parallel to the plane of polarization of the irradiated infrared light as shown in Fig. 16 (i) is oriented in the direction perpendicular to the substrate surface and perpendicular to the plane of polarization of the irradiated infrared light (at this time, the state of the discotic molecules changes from Fig. 16 (i) to Fig. 16 (ii)), or the discotic molecules are re-oriented to a state in which the disk plane is oriented in the direction parallel to the substrate surface (at this time, the state of the discotic molecules changes from Fig. 16 (i) to Fig. 16 (iii)), or both states are intermixed.

### Next, the non-linear polarization case (random polarization, circularly polarized light, etc.) will be explained.

(Case 3) When hexakishexyloxytriphenylene (compound I) is in a hexagonal columnar mesophase of a liquid phase or a solid phase, and a vibrational transition moment which is vibrated and excited by incident irradiated infrared light is in the out-of-plane direction with respect to the disk plane of the discotic molecules.
- The wavelength at which the aromatic C-H bonds of the triphenylene skeleton moiety vibrate and absorb is 11.92 µm (839 cm⁻¹).

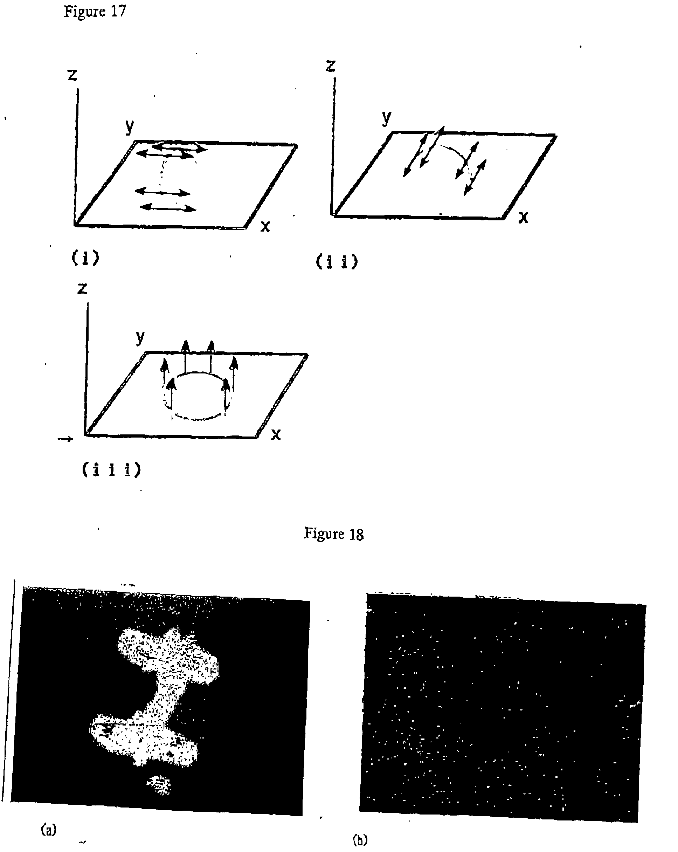

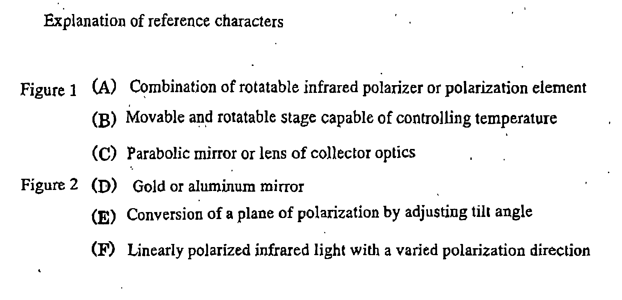

When irradiating with infrared laser light from directly above with a device as shown in Fig. 1 (b), discotic molecules in which the disk plane is oriented to the direction perpendicular to the substrate surface (direction in the plane is not specified) as shown in Fig. 17 (i) or (ii) are re-oriented to a state where the disk plane is oriented in a direction parallel to the substrate surface. More specifically, the state of the discotic molecules changes from Figs. 17 (i) and (ii) to Fig. 17 (iii).

Utilizing this method, molecular planes can be uniquely re-oriented to a direction parallel to the substrate surface even when liquid crystal molecules are not oriented uniformly in the in-plane direction in the substrate surface.

In the above description, the molecular material used in Example 1 is taken as an example. The orientation of other molecular materials can be varied in the same way however.

Unlike interface orientation technology or liquid crystal material orientation control technology using visible light, the present invention can be applied to various molecular materials such as liquid crystal materials, polymer liquid crystal materials, amorphous materials, orientation polymer materials, etc., since vibrational energy absorption of intramolecular bonds is utilized even when they contain no photoisomerizable functional groups having absorption wavelengths in the visible light region. In particular, the present invention can be used as an orientation control technology for a liquid crystal such as a columnar phase in which self-aggregation is strong and uniform orientation is hard to obtain merely by interacting with a substrate interface.

Moreover, the present invention can be used as molecular orientation control technology that can independently control main-chains and side-chains of a polymer liquid crystal.

In the invention, liquid crystal molecule aggregation can be controlled via re-orientation by adjusting the irradiating direction and polarization direction of the infrared light. More specifically, polarized light can be used as irradiation of infrared light in the same manner as in an optical orientation controlling method using visible light, and moreover even non-polarized light can be used to irradiate the substrate obliquely. Thus, the orientation direction of the columnar phase of a discotic liquid crystal can be controlled. Moreover, fine structure can be formed by utilizing proximity effects with an infrared waveguide, a pipette, etc., or by projecting infrared light through a photomask (gold mask); fine processing can also be carried out utilizing the fact that there is an irradiating infrared light intensity threshold for changing orientation.

In the invention, the temperature of the molecular material at the time of infrared light irradiation is not limited. It is preferable to set the temperature in the range where the molecular material exhibits a solid phase or a mesophase, and in the case of a polymer material, a temperature not less than or not more than a glass transition point may be accepted. The temperature of the molecular material is dependent on the substance, and is generally in the range from a room temperature to 250°C, preferably from a room temperature to 200°C and more preferably from a room temperature to 180°C. In the case of a molecular material with low absorbance, a raised temperature is preferable.

For example, the temperature of liquid crystal molecules is preferably set in the range where the liquid crystal molecules develop a solid phase or a mesophase. For example, it is preferable to set the temperature of hexakishexyloxytriphenylene to 99°C or less, more preferably room temperature to 99°C, and still more preferably 69°C to 99°C.

The infrared light irradiation period is not limited, and is generally 0 to 10 hours, preferably 1 millisecond to 30 minutes, more preferably 1 millisecond to 5 minutes, and in particular preferably 1 millisecond to 1 minute.

When the molecular material is a polymer material, a film, sheet, membrane, plate, etc., is suitable for the molecular material. The thickness of such a molecular material is generally 1 nm to 10 mm, preferably 100 nm to 1 mm, more preferably 1 µm to 200 µm, in particular preferably 1 µm to 100 µm, and most preferably 1 µm to 50 µm. For a thick molecular material of, for example 1 cm, only surface molecules can be oriented.

In the case of a liquid crystal, the thickness of the liquid crystal material is preferably 10 nm to 100 µm, more preferably 100 nm to 50 µm, and still more preferably 1 µm to 10 µm.

The intensity of infrared light to be irradiated is dependent on temperature, viscosity, and fluidity of the light irradiation target and is preferably about 0.1 to about 100 mW.

The orientation of every functional moiety in the molecules can be controlled by irradiating the material with infrared laser light of different wavelengths successively or simultaneously since specific chemical bonds of functional moieties in the molecules can be excited and vibrated selectively. Therefore, the present invention can provide a new structure construction technology for building functional materials such as an orientation film using a polymer or an organic thin film without being limited to liquid crystals and various elements. For example, a solid polymer can be oriented when heated at a temperature between the glass transition point and the melting point. During this process, the temperature may be at the glass transition point or below. Liquid crystal molecules can be re-oriented not only in the temperature range wherein a liquid crystal state is exhibited but also in a state wherein order is higher than in a liquid crystal, such as a crystal.

The orientation of the molecules can be switched between the in-plane and out-of-plane directions with respect to a plane perpendicular to an incident light axis by irradiating with infrared light twice or more according to the invention.

The holdout of the molecular orientation according to the present invention is dependent on the temperature of the liquid crystal state, and the orientation is stable at a lower temperature in a liquid crystal state.

### Molecular orientation controlling device

The molecular orientation controlling device of the invention is provided with an infrared light irradiation unit (e.g., beam manipulator) and a placement unit for a molecular material that is the subject to be irradiated with infrared light. A rotatable infrared polarizer, polarization element, lens of collector optics or condensing concave mirror can be further included, if required (refer to Fig. 1).

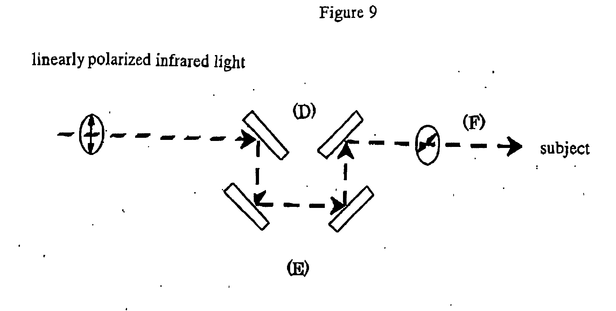

The polarization element includes a polarizer, a polarization filter, a wave plate, Glan-Thompson prism, etc. Alternatively, the polarization direction can be controlled by a combination of mirrors (Fig. 9). A polarization direction controlling device includes, for example, a rotatable polarizer or polarization element.

The distance between the above-mentioned infrared light irradiation unit and the above-mentioned placement unit varies depending on the focal length of the lens of collector optics or condensing concave mirror. In the case of the collector optics, the placement unit is preferably arranged at near focus point.

An infrared light irradiating unit which emits infrared light and has polarization dichroism is suitable and a unit that gives linear polarization and can vary the wavelength is more preferable. It should be noted that visible light irradiation may be carried out simultaneously.

Infrared light may include laser light or light monochromated with a spectroscope.

It is recommended that the wavelength of infrared light is equivalent to the vibrational excitation energy of an intramolecular chemical bond. For example, for aromatic-based liquid crystal molecules it is preferable to vibrate and excite a chemical bond of an aromatic moiety which is the molecular skeleton region in view of easy control of the orientation direction after re-orientation. It is preferable to excite a chemical bond within a main structure (molecular skeleton) other than side chains or substituents and a chemical bond between the molecular skeleton and substituents directly bonded to the molecular skeleton in other molecular materials as well.

The light intensity is dependent on the temperature of the light irradiating target, and is preferably about 0.1 to about 100 mW.

Wavelength controlling devices of infrared light in the present invention include, for example, free electron laser or a combination of an infrared light source and a spectroscope (monochromator).

Infrared light irradiation may be continuous irradiation or pulse irradiation. In the case of pulse irradiation, the irradiation period is dependent on temperature, and is preferably from 100 millisecond to 20 minutes. In one preferred embodiment, the number of pulses is about 5 to about 15 macropulses/second, with 1 macropulse consisting of 300 to 500 micropulses. The exposure dose is from about 1 mJ to about 5 J. Irradiation intensity conditions also vary depending on the absorbance of the target infrared absorption mode.

According to the present invention, a high-order liquid crystal system of high viscosity, such as a columnar phase, can be re-oriented. High viscosity systems or high order systems can stably maintain orientation in a re-oriented region longer than low viscosity or low order systems.

The placement unit is preferred to have a structure by which a substance with fluidity can be retained, and whose temperature can be controlled, and moreover is movable and rotatable. The temperature can be controlled by being provided with a heater and a sensor which senses temperature and by switching on and off the heater based on the temperature measured by the sensor. The range of temperature to be controlled is from about a room temperature to about 200°C. The movement range of the placement unit is not limited, and is generally from about 1 µm to about 5 mm with respect to the horizontal direction and perpendicular direction to the plane of the placement unit. The rotation of the placement unit is preferably about +90° to about -90°.

In one of the preferred embodiments of the invention, the infrared light irradiating unit has one fixed incident direction, and may be provided with two or more irradiating units. The incident direction controlling device includes a mirror (Fig. 9), a rotatable polarizer or polarization element, and a phase plate to be inserted in the optical path. The incident direction can also be controlled by rotating the irradiated subject. Either mirrors or the above-mentioned condenser lens may be placed at a light source side.

The angle of the incident direction may vary by about 10%.

### Application of the molecular orientation controlling technology by the invention

In the present invention, the molecular orientation controlling technology using infrared light irradiation can be applied to a wide range materials, not only liquid crystal substances but polymers and organic thin films. Molecular materials, such as liquid crystal materials, polymer films, organic thin film, etc., in which molecular orientation is controlled by irradiation with infrared light, are useful as optical recording materials, conductive materials, optical waveguides, phase-contrast films, etc. The invention can be used not only as a technology for enhancing performance of electronic materials, such as electrographic photo conductors, charge transportation materials for electroluminescence, various oriented films for liquid crystal elements, photoelectronic materials, etc., but also as a new fine structure producing technology for elements using polymers. Moreover, the invention can be used for developing higher-performance material since the orientation direction can be controlled for every intramolecular chemical bond.

The obtained elements can be used for a functional element within a wide range of temperature by fixing the molecular structure of the material which is subjected to orientation by infrared light irradiation by photopolymerization or photo-setting, cross-linking with the substrate, polymerization, etc.

A conductive material in which molecular orientation is controlled by the molecular orientation controlling method of the invention may be disposed between substrates such as glass, an ITO transparent conductive film, or a metal thin film coated substrate, to form a photoelectronic element.

### EXAMPLES

### Example 1

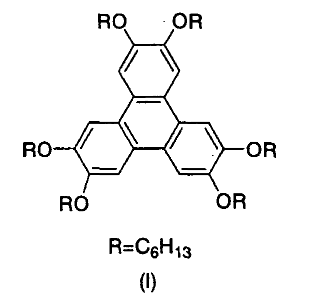

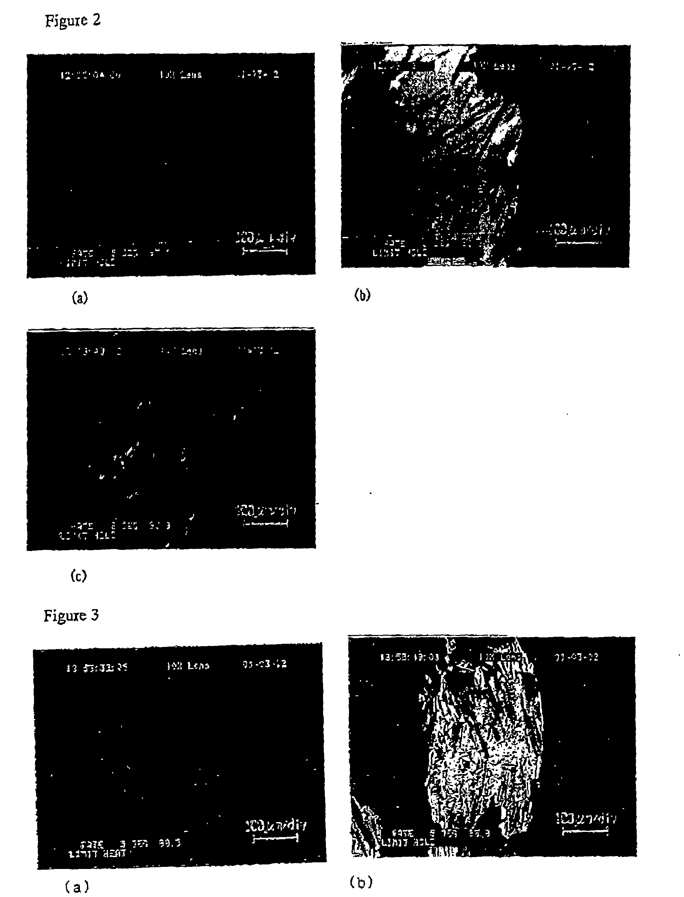

With the device shown in Fig. 1 (b) (the lines of upper and lower sides of the subject are equivalent to substrates), an infrared laser pulse with polarization dichroism having a wavelength of 6.19 µm (1,615 cm⁻¹), at which aromatic C-C bonds of a triphenylene skeleton moiety vibrate and absorb, was used to irradiate diagonally from the above hexakishexyloxytriphenylene (compound I) in the form of a hexagonal columnar liquid crystal in which the molecular planes are uniformly oriented horizontally to the substrate at the temperature of 94°C, which exhibits a mesophase. Thus, the domain structure of the irradiated region changes (Fig. 2 (a) to (b)), and molecular orientation changes to a uniform vertical orientation with respect to the substrate. The irradiation period of the infrared laser pulse varies depending on irradiation conditions and is from several seconds to several minutes.

Subsequently, the polarization direction of the infrared laser pulse was rotated by 90°, and was then used to irradiate region (b). Thus, the domain in which the orientation of the molecular plane had been changed to a vertical orientation with respect to the substrate by the previous irradiation was changed back to the initial state wherein the molecular planes are in a uniformly horizontal orientation with respect to the substrate, which results in the dark field image in the polarizing microscopic image (Fig. 2 (b) to (c)).

In Fig. 2, (a) shows a polarizing microscopic image before irradiation, (b) shows a polarizing microscopic image under crossed Nicols when irradiated obliquely with an infrared laser pulse with polarization dichroism having a wavelength of 6.19 µm (1,615 cm⁻¹) and (c) shows a polarizing microscopic image when irradiating region (b) with irradiating light after rotating the polarization direction by 90°.

The polarizing microscopic image did not change when irradiated with an infrared laser pulse of 5.95 µm (1,681 cm⁻¹) corresponding to no infrared-absorption band.

The domain structure of the irradiated region varied and the molecular orientation changed to a state wherein the molecular planes were uniformly oriented perpendicularly to the substrate when a hexagonal columnar liquid crystal in which the molecular planes were uniformly oriented horizontally to the substrate, even at 80°C was irradiated with infrared laser pulse (irradiation period: from several seconds to several minutes).

### Example 2

With the device shown in Fig. 1 (b), an infrared laser pulse with polarization dichroism having a wavelength of 6.63 µm (1,509 cm⁻¹) at which aromatic C-C bonds of a triphenylene skeleton moiety vibrate and absorb was used to irradiate (irradiation period: from several seconds to several minutes) diagonally from above a hexagonal columnar liquid crystal (Compound I) in which the molecular planes were uniformly oriented horizontally to the substrate at a temperature which develops a mesophase. The domain structure of the irradiated region varied (Fig 3 (a) to (b)) and the molecular orientation changed to a vertical orientation with respect to the substrate.

The region in which orientation was once changed was maintained even when the infrared laser irradiation was suspended.

In Fig. 3, (a) shows a polarizing microscopic image before irradiation and (b) shows a polarizing microscopic image under crossed Nicols when irradiated diagonally with infrared laser pulses with polarization dichroism having a wavelength of 6.63 µm (1,509 cm⁻¹).

### Example 3

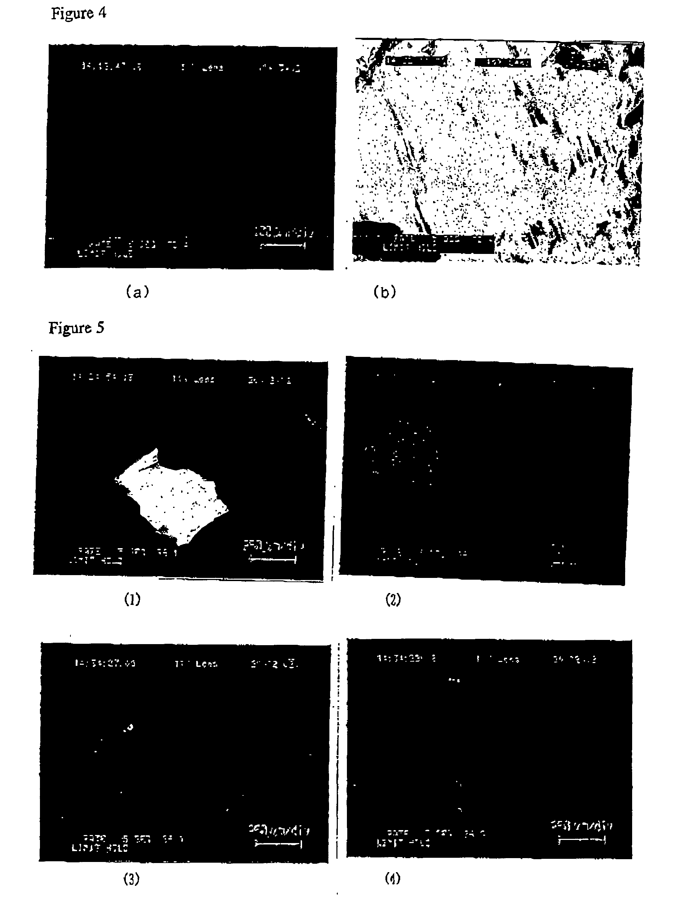

With the device shown in Fig. 1 (b), an infrared laser pulse with polarization dichroism having a wavelength of 8.58 µm (1,166 cm⁻¹) at which aromatic C-O-alkyl chain-C bonds of an alkoxy moieties of the compound I absorbs was used to irradiate (irradiation period: from several seconds to several minutes) diagonally from above a hexagonal columnar liquid crystal (Compound I) in which the molecular planes were uniformly oriented parallel to the substrate at a temperature which exhibits a mesophase. The domain structure of the irradiated region varied (Fig 4 (a) to (b)) and the molecular orientation was changed in such a manner that molecular planes were oriented to a vertical orientation with respect to the substrates.

### Example 4

Subsequent to Example 3, infrared laser light equivalent to a wavelength (11.92 µm, 839 cm⁻¹) at which aromatic C-H bonds of triphenylene skeleton moieties vibrate and absorb was used to irradiate subsequently in the same manner with the device shown in Fig. 1 (b), and thus the region in which the molecular planes had been changed to a vertical orientation with respect to the substrate by infrared light irradiation in Example 3 were returned to the state where the molecular planes were uniformly oriented horizontally to the substrate.

These processes were able to conduct in a reversible manner.

### Example 5

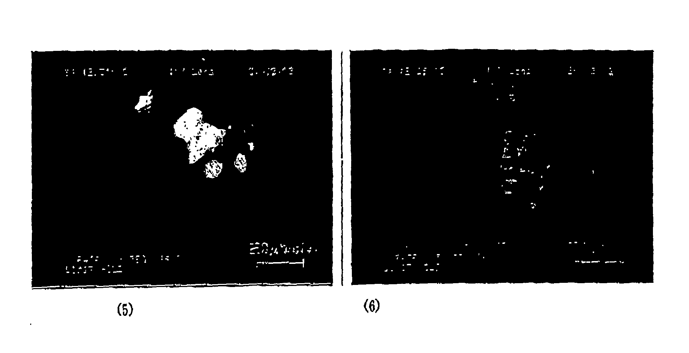

With the device shown in Fig. 1 (a), infrared light having a wavelength of 6.19 µm (1,615 cm⁻¹) equivalent to the absorption of an aromatic C-C bonds with a vibrational transition moment of the in-plane direction with respect to the disk plane of a liquid crystal (compound I) was pre-irradiated, and thus the molecular planes were re-oriented to the vertical orientation with respect to the substrate (Fig. 5 (1)). Subsequently, infrared laser pulse having a wavelength 11.92 µm (839 cm⁻ ¹) equivalent to an aromatic C-H bonds with a vibrational transition moment in an out-plane direction with respect to the disk plane of the liquid crystal molecules was used to irradiate the re-oriented region (irradiation period: from several seconds to several minutes), and the region in which the molecular planes were oriented perpendicularly to the substrate was switched to a horizontal orientation (Fig. 5 (1) to (3)). Infrared light of 6.19 µm (1,615 cm⁻¹) was irradiated again, and thus the molecular planes were re-oriented to the vertical orientation with respect to the substrate (Fig. 5 (3) to (5)).

Each sample shown in Figs. 5 (1), (3) and (5) was rotated by 45°, and it was confirmed that the light irradiated regions became dark (Figs. 5 (2), (4) and (6), respectively).

In Figs. 5, (1) through (6) show polarizing microscopic images under crossed Nicols.

### Example 6

With the device shown in Fig. 1 (a), infrared laser pulse having a polarization dichroism and a wavelength of 7.93 µm (1,262 cm⁻¹) at which aromatic C-O bonds of alkoxy moieties absorb was used to irradiate a hexagonal columnar liquid crystal (compound I) in which the molecular planes were uniformly oriented horizontally to the substrate at 94°C while scanning in an H-shape. The irradiation period was one minute, exposure dose was about 500 mJ and focal length from the lens of collector optics was 130 mm. As a result, the domain structure of the irradiated region varied and the molecular orientation was changed in such a manner that molecular planes were directed from a horizontal orientation to a uniformly vertical orientation to the substrate.

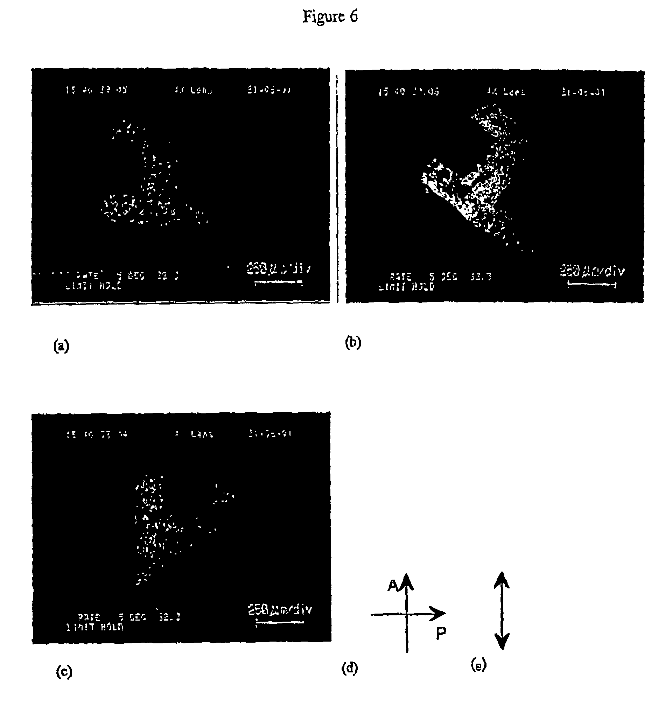

After scanning in an H-shape and halting infrared laser irradiation, the stage was rotated by 45°. It was then confirmed that the light irradiated region became bright (Fig. 6) through observation with a polarizing microscope.

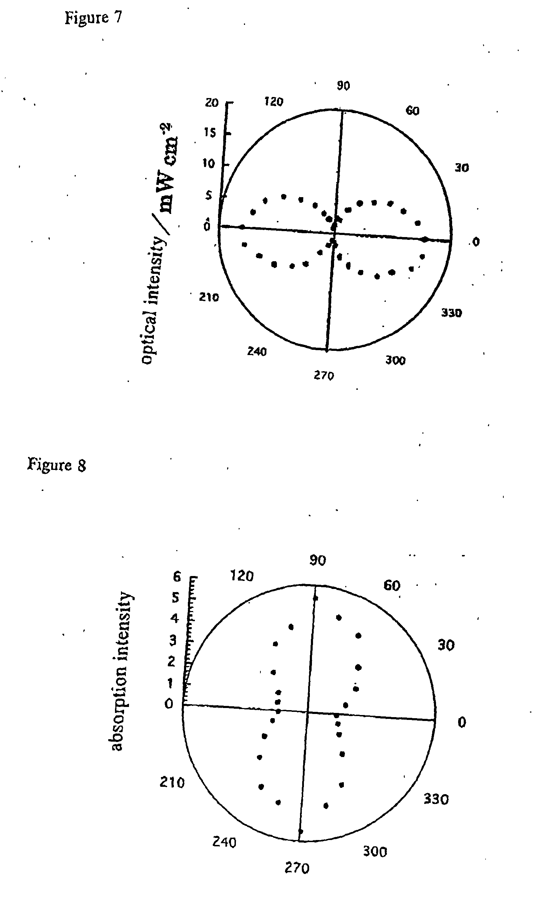

In Fig. (6), (a) shows a polarizing microscopic image under crossed Nicols when irradiating with a infrared laser pulse having the polarization characteristics shown in Fig. 7 and a wavelength of 7.93 µm (1,262 cm⁻¹), (b) shows the image after rotating the stage by 45°, (c) shows the image after rotating the stage by a further 45°, (d) shows the directions of an analyzer (the direction of A) and a polarizer (the direction of P) in the case of (a), and (e) shows the polarization direction of irradiating infrared laser pulse light in the case of (a).

Even after infrared laser irradiation had been halted, the region in which the orientation was changed was maintained. The orientation was maintained for at least for several hours at 90°C, and was maintained over a whole day and night at 80°C.

The direction of the optical axis of the varied domain region changed at ± 90° in relation to the polarization direction of the irradiated infrared pulse laser and the direction of the transition moment of the excited vibrational excitation (Figs. 7 and 8).

Molecular orientation control in which the same relation was maintained is also possible by irradiation with infrared light while varying the direction of the plane of polarization of the irradiated infrared light through use of mirrors in the same manner (Fig. 9).

### Example 7

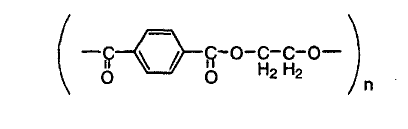

A poly(ethylene terephthalate) film (25 µm thickness, Toray Industries, Inc. "Lumirror") of uniaxial orientation at a room temperature was irradiated from the directly above with polarized infrared laser pulses (8 to 15 mW) equivalent to a wavelength (1,726 cm⁻¹, 5.79 µm) at which the C=O bond in the carbonyl moiety of an ester bond absorbs or to a wavelength (1,019 cm⁻¹, 9.82 µm) or a wavelength (1,409 cm⁻¹, 7.10 µm) at which a polymer film absorbs, at each temperature of a room temperature, 80°C, 130°C, or 180°C for 1 minute using a Galvanic mirror while scanning. The orientation of the irradiated region varied in all cases, and as a result the optical retardation was also varied. Fig. 18 (a) shows a polarizing microscopic image in the case of wavelength of 5.79 µm.

It was confirmed with the polarizing microscope that the orientation was changed by one micropulse.

It was confirmed that the light irradiated region had become dark through observation with a polarizing microscope when the stage had been rotated by 45° after the infrared laser irradiation was halted (Fig. 18 (a) to (b)). Even after irradiation of infrared laser had been suspended, the region in which the orientation was changed once was maintained.

### INDUSTRIAL APPLICABILITY

According to the molecular orientation controlling procedure using a polarized infrared light of the present invention, a minute molecular orientation control process for a liquid crystal material and a polymer liquid crystal material in a liquid crystal phase and a solid phase can be provided by utilizing the relationship between the polarization direction of the irradiating light and the molecular orientation direction of the re-oriented molecules and the functional groups in their molecules.

According to the present invention, the molecular orientation can be controlled by infrared light irradiation not only in a mesophase state, such as a liquid crystal state, but also in a solid state. Thus, the molecular orientation controlling technology by infrared light irradiation becomes applicable to a wide range materials: in addition to a liquid crystal substances, polymers, organic thin films, etc.

Molecular orientation may be controlled in various compounds which have an absorption band in the infrared region by selecting an infrared light wavelength which excites a vibrational energy level to a part of a liquid crystal molecular skeleton even when they have no specific functional group causing photoisomerizing reaction by visible light, unlike interface orientation or liquid crystal molecular orientation technology using visible light.

In particular, liquid crystals in which uniform orientation is difficult to obtain merely by interactions with a substrate interface, such as columnar phases with strong self-aggregative properties can be uniformly oriented through control of the direction of the column axis.

Moreover, a chemical bond of a specific functional moiety in a molecule can be vibrated and excited selectively by the present invention, and thus the orientation for every functional moiety in a molecule can be controlled by irradiating with infrared laser light at different wavelengths several times. As compared with a prior method of varying orientation direction of a molecule by irradiating with infrared light per a chemical bond, the method of the present invention varies the bond direction of two or more bond moieties in a molecule, whether or not the orientation direction of the whole molecule is varied, and as a result, torsion generated in the molecule and thus the conformation of the molecule can be varied. The method of the present invention is applicable to, for example, adjustment of the birefringence index of an optical film, reactions while controlling stereo structure or polymer cross linking.

The present invention can also be used as a molecular orientation controlling technology that can control the main-chain and side-chains of a polymer independently.

Based on the above description, a new structure building technology for building functional materials, such as not only liquid crystals but also orientational films using polymers or organic thin films and various elements, can be provided.

The present invention can be applied to nano-size level processing by utilizing near-field effects using scattering of an infrared waveguide, an aperture, a metal needle, a pipette, etc., and by projecting infrared light through a photomask, when irradiating with infrared light. Moreover, minute processing can be conducted utilizing the threshold of the irradiating infrared light intensity at the time of varying orientation.

The present invention can provide a rewritable recording element or an optical waveguide element that can rewrite an optical path by switching orientation direction.

The present invention is also expected to be of use for development of higher-performance materials since the orientation direction of every intramolecular chemical bond can be controlled.

## Claims

1. A method for controlling orientation of a molecular material which is **characterized by** orienting molecules of the material by irradiating the molecular material with infrared light.

2. The method according to Claim 1, wherein the infrared light is polarized infrared light.

3. The method according to Claim 1, wherein the molecular material is at least one selected from the group consisting of liquid crystal material, amorphous material, plastic crystal material, polymer liquid crystal material and orientational polymer material.

4. The method according to Claim 3, wherein the liquid crystal material forms a liquid crystal phase.

5. The method according to Claim 3, wherein the liquid crystal material forms a solid phase.

6. The method according to Claim 1, which comprises irradiation with infrared light of a wavelength which vibration moment in optional intramolecular bonds of the molecular material absorbs, to orientate the molecules in a certain direction with respect to the polarization direction or incident direction of the irradiation light wherein the direction of the vibration moment is perpendicular to the polarization direction or parallel to the incident direction.

7. The method according to Claim 1, wherein the molecular material is sandwiched between two substrates, and said method comprises switching orientation of the molecular material reversibly between directions parallel and perpendicular to the substrates by irradiation with polarized infrared light from perpendicular or parallel direction with respect to the substrate at least twice while varying at least one selected from the group consisting of incident direction, polarization direction and wavelength.

8. The method according to Claim 1, which is **characterized by** controlling orientation for each segment in the molecules of the material towards a desired direction by irradiating simultaneously or sequentially with infrared light of different wavelengths.

9. The method according to Claim 1, wherein the infrared light has a wavelength within the range of 2.5 to 25 µm.

10. The method according to Claim 1, wherein the infrared light is laser light.

11. The method according to Claim 1, wherein the molecular material is sandwiched between two substrates, and said method comprises switching the orientation of the molecules between the in-plane and out-of-plane directions with respect to the substrate surfaces by irradiation with infrared light at least twice.

12. The method according to Claim 1, wherein the molecular material develops a liquid crystal phase selected from the group consisting of a nematic phase, a smectic phase, a cholesteric phase, a columnar phase and a cubic phase, or the related mesophase within a specific temperature range, and is liquid crystal molecular which molecular orientation is varied by being irradiated with the infrared light.

13. The method according to Claim 12, wherein the material is a columnar phase.

14. A functional material in which molecular orientation is controlled by the method according to Claim 1.

15. The material according to Claim 14, wherein the functional material is an optical recording material, a conductive material, an optical element or an optical waveguide.

16. The material according to Claim 14, wherein the functional material is an optical recording material in which the molecules of the material are fixed by photopolymerization, photo-crosslinking or photo-setting.

17. An orientation controlling device for a molecular material which is provided with an infrared light irradiation unit and a placement unit for the molecular material.

18. The device according to Claim 17 which is provided with a polarization element that transforms infrared light to polarized infrared light.

19. The device according to Claim 17 which is provided with a controlling unit of incident direction of an infrared light.

20. The device according to Claim 17 which is provided with a controlling unit of a polarization direction.

21. The device according to Claim 17 which is provided with a controlling unit of an infrared light wavelength.

22. The device according to Claim 17 wherein the infrared light has a wave number between 400 cm⁻¹ and 4,000 cm⁻¹ (2.5 µm to 25 µm) and has polarization dichroism.

23. The device according to Claim 17 wherein the placement unit is provided with a temperature controlling unit for controlling the temperature to the specific range in which the molecular material can develop a liquid crystal phase or a mesophase.
